# EUROPEAN PATENT SPECIFICATION

(11) **EP 3 317 098 B1**
(45) Date of publication and mention of the grant of the patent: **23.09.2020**
(21) Application number: 16816847.4
(22) Date of filing: 30.06.2016
(51) Int. Cl.: B32B 25/04, B32B 5/18, A41D 19/015, B32B 27/12, B32B 27/40, C09D 123/06, A41D 31/06, B32B 25/00, B32B 25/10

(54) **THERMALLY CONDUCTIVE GLOVE**
WÄRMELEITENDER HANDSCHUH
GANT THERMIQUEMENT CONDUCTEUR

(30) Priority: 02.07.2015 US 201562188061 P
(43) Date of publication of application: 09.05.2018
(73) Proprietor: Ansell Limited, Richmond, Victoria 3121 (AU)
(72) Inventor: HASSAN, Noorman, Abu, 40400 Shah Alam Selangor (MY); NAZARETH, Darryl, Flanders, NJ 07836 (US); UJAR, Ahmad, Helmi, 40170 Shah Alam Selangor (MY)
(74) Representative: AWA Sweden AB
(86) International application number: PCT/AU2016/000230
(87) International publication number: WO 2017/000017

(56) References cited:
- CN-A- 102 379 467
- CN-A- 102 379 467
- CN-Y- 201 108 053
- US-A1- 2002 197 923
- US-A1- 2008 083 721
- US-A1- 2009 049 871
- US-A1- 2013 104 286
- US-A1- 2015 143 608

## Description

### BACKGROUND

### Field

The present invention relates generally to protective articles and, more particularly, to protective articles such as gloves, sleeves, socks, and/or other wearable articles that include protective polymeric layer(s), which provide heat management properties via addition of thermally conductive fillers into the polymeric layer(s). US 2013/104286 discloses a glove according to the preamble of claim 1.

### Description of the Related Art

Many protective articles, such as gloves, sleeves, and the like, which are worn in industrial and/or household settings, have polymeric barriers disposed thereon. However, such articles are lacking in comfort due to poor thermal heat dissipation. In addition, discomfort caused by perspiration can also be a problem, particularly profuse sweating and related odor and germ proliferation issues, and ultimately leads to, for example, frequent glove and/or sleeve changing, which is expensive and affects manufacturing productivity.

Industrial workers often wear gloves for several hours and heat builds gradually between the skin and a glove surface that contacts the skin, which can lead to discomfort through excessive sweating and chafing. Robust gloves that have thicker polymeric coatings exacerbate this condition.

Surgical or examination gloves, and/or flock-lined gloves, and/or supported gloves include a fabric liner and a barrier layer(s), comprise polymeric materials that act as insulators. Users are faced with two choices, each of which is less than optimal. One type of glove that users may choose is a glove wherein the barrier layer includes open celled polymeric foams, which breathes and is capable of releasing some heat from within, providing some level of comfort. However, gloves having open celled foams are incapable of providing barrier properties from exposure to chemicals and/or pathogens, e.g., viruses and bacteria. Also, gloves having open celled foams are less wear resistant. A second type of glove includes either a non-foamed polymeric barrier or a closed-cell polymeric foam, which can provide barrier protection but traps heat, leading to excessive perspiration that cannot evaporate.

The mechanism of sweat liberation from human skin, especially at the palm region, needs to be clearly understood in order to address heat dissipation from a human palm having a glove worn thereon. Heat transfer describes the exchange of thermal energy between physical systems, depending on the temperature and pressure. The fundamental modes of heat exchange are conduction, convection and radiation. Within an organism, the process of conduction is the prevalent manner of heat transfer from the body core to the surface. Heat is conducted through layers of skin tissue or via the blood. As skin temperature increases, the sweat glands begin to function. This occurs at approximately a skin temperature of 35°C, subject to individual variation. When sweating has been adequate to reduce the temperature of blood perfusing the thermoregulatory center, the rate of sweat production is reduced until equilibrium is established. The evaporation of sweat from the surface of the skin also provides a cooling effect. However, the physiological response of humans to a hot ambient temperature is the flow of blood to the surface, wherein cardiovascular activity maintains blood flow and rapid heat transfer within the organism to physically remove heat from the skin surface.

Inorganic fillers have been added to polymer matrices within polymeric gloves for increasing cut-resistance, abrasion resistance, and/or electrical conductivity. However, to date, no gloves or other wearable articles in close contact with skin, have promoted heat transfer such that the article is capable of and/or adapted to maintain a temperature inside the article that is substantially similar to the temperature of human skin compared with a temperature while the skin is not within the article.

With the foregoing in view, the inventors have invented thermally conductive gloves comprising a polymeric or elastomeric layer(s), optionally foamed, having thermally conductive particle fillers dispersed therein for use as an unsupported glove, a flock lined glove or a supported glove further comprising a fabric liner, wherein the glove conducts heat from the human body to the external environment, resulting in a glove having thermal managing properties.

### SUMMARY

Thermally conductive gloves, and methods for manufacturing thermally conductive gloves, substantially as shown in and/or described in connection with at least one of the figures, as set forth more completely in the claims. Various advantages, aspects and novel features of the present disclosure, as well as details of an illustrated embodiment thereof, will be more fully understood from the following description and drawings.

### DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only illustrative embodiments of this invention and are therefore not to be considered limiting of its scope, for the invention may admit to other equally effective embodiments.
FIG. 1 depicts an unsupported glove having thermally conductive particles, according to embodiments of the invention;
FIG. 2 depicts a close up view of the unsupported glove of FIG. 1, according to embodiments of the invention;
FIG. 3 depicts a supported glove having thermally conductive particles embedded within a fabric liner and a polymeric coating, according to embodiments of the invention;
FIG. 4 depicts a cross-section taken along line 4-4 of the supported glove of FIG. 3, according to embodiments of the invention;
FIG. 5 depicts a method for forming an unsupported glove comprising a polymeric layer or a supported glove having a fabric liner and a polymeric layer having a plurality of thermally conductive particles, according to embodiments of the invention; and
FIG. 6 depicts a diagram for a method and apparatus for producing a supported glove, according to embodiments of the invention.

### DETAILED DESCRIPTION

Thermally conductive gloves according to embodiments of the invention comprise a polymeric layer containing thermally conductive filler material(s). In some embodiments, the polymeric layer may comprise a non-foamed polymeric layer, a foamed polymeric layer, or a multi-layer glove having both a non-foamed polymeric layer and a foamed polymeric layer. The non-foamed polymeric layer and the foamed polymeric layer comprise non-foamed and/or foamed lattices and inorganic crystalline particles mixed therein, which provide unexpected enhanced thermal conductivity in an otherwise insulating polymeric layer. Suitable inorganic crystalline particles include fillers having high thermal conductivities, i.e., thermally conductive particle fillers. For example, h-Boron Nitride (h-BN), natural crystalline Boron Nitride (c-BN), and/or natural crystal vein carbon graphite (NCVCG), are suitable highly crystalline particle fillers because of their high thermal conductivities. In some embodiments according to the invention, the inorganic crystalline particle fillers are highly crystalline. In this context, highly crystalline indicates that the crystalline structure of the inorganic crystalline particle fillers is high in degree, as is known to those in the art. In some embodiments according to the invention, the highly crystalline fillers comprise hexagonal rhombohedral crystalline structures.

Carbon-based fillers couple high thermal conductivity properties and lightweight properties. Crystalline graphite also has a suitably high thermal conductivity. Single-walled carbon nanotube (SWCNT) and vapor-grown carbon fiber (VGCF) are more expensive than crystalline graphite, natural crystalline vein graphite (NCVG), or natural crystal vein carbon graphite (NCVCG), yet the mechanical, electrical and thermal properties are comparable to the less expensive crystalline graphite, NCVG and/or NCVCG fillers. Therefore, c-BN, h-BN, NCVCG, and NCVG are suitable particles to achieve enhanced thermal cooling comfort for articles comprising polymeric or elastomeric layers, such as gloves; and induce ambient cooling and, therefore, comfort to the user's skin contacting a glove surface upon period of glove usage. The elastomeric layer, whether disposed on a fabric liner or on a former, can be a foamed or a non-foamed polymer coating.

The elastomeric layer can disposed on or otherwise adhered to a knitted fabric liner or flock lining or dip-able flock composite layer to provide a skin contacting layer that is comfortable to a user. The skin-contacting, i.e., donning, elastomeric flocked layer or dip-able flocking layer can also comprise thermally conductive particles to enhance the cooling and comfort through an effective transportation of heat generated from the human body or conduction across the glove to an exterior surface of the glove.

Also, a particle size of the inorganic crystalline additives generally ranges from 1 to 300 microns and, in some exemplary embodiments, range from 130-260 microns and, in some exemplary embodiments, 5 to 10 microns for better dispersal within layers and coatings made from polymeric compositions. Moreover, smaller particles provide additional surface contact area and, therefore, increased heat transfer by conduction across the articles, e.g., gloves, sleeves, and the like. In some embodiments of the invention, the inorganic crystalline particles, e.g., the h-BN, c-BN and natural crystal vein carbon graphite particles are reduced in size, cut, and/or crushed from 300 microns to 5-10 microns. A particle size of 1 to 300 microns has provided unexpectedly enhanced thermal cooling as the particles remain well suspended in polymeric dispersions and/or colloids and, furthermore, without intending to be limited by theory, it is believed that a particle size of 1 micron to 300 microns in diameter provides a free phonon path length for a phonon spectra, without scattering, appropriate for enhanced thermal conduction. In other words, a particle diameter of 1 to 300 microns is easily suspended and well dispersed through the polymeric compositions, providing an unexpectedly effective phonon path length. Also, larger particles will not disperse well nor be easily suspended while nano-sized particles are dispersed and suspended well, but have a high level of phonon scattering, resulting in an unfavorable reduction in thermal conductivity.

Embodiments according to the invention comprise a lining, such as a knitted fabric liner or a flock lining, made from a yarn and/or fibers and/or staple fibers. For example, a fabric liner may be knitted and coated with a polymeric layer having the thermally conductive particle fillers mixed therein to produce a supported article, such as a glove. Some gloves or articles according to the invention include a flock-lined article, for example, staple fibers that are adhered to or within and projecting from a polymeric or elastomeric layer Some gloves according to embodiments of the invention comprise one or more polymeric or elastomeric layers, such as a surgical glove or an examination glove. Each article comprises at least one polymeric or elastomeric layer that further comprises at least one thermally conductive particle filler. Thermally conductive particle fillers transfer heat, such as body heat, internally from the polymeric or elastomeric layer that contacts the skin through an internal surface of the layer through the external layer of the glove by thermal conduction to the external environment. Also, any yarn used to knit a fabric liner or any flock may comprise the thermally conductive particle fillers. For example, yarns and/or fibers may be gel spun or wet spun with the thermally conductive particle fillers, creating thermally conductive yarns and/or flock, which can further promote the conduction of heat from the skin, through the glove to an external surface of the glove, where it can be transferred to the environment.

Embodiments according to the invention provide a mechanism to conduct the body heat of a gloved hand from a skin interface, below the skin threshold temperature where sweating starts, by dissipating the heat generated by the skin within the inside of the glove, through an interface of the skin and a glove and through the thickness of the glove to the environment.

Unsupported gloves, flock lined gloves, and/or supported gloves further comprising a fabric liner, capable of conducting heat from the human body to the external environment, resulting in a glove having thermal managing properties are each contemplated herein. Furthermore, a flock lining and/or a fabric liner, comprising yarns, filaments, and/or staple fibers may have thermally conductive particle fillers disposed therein or thereon.

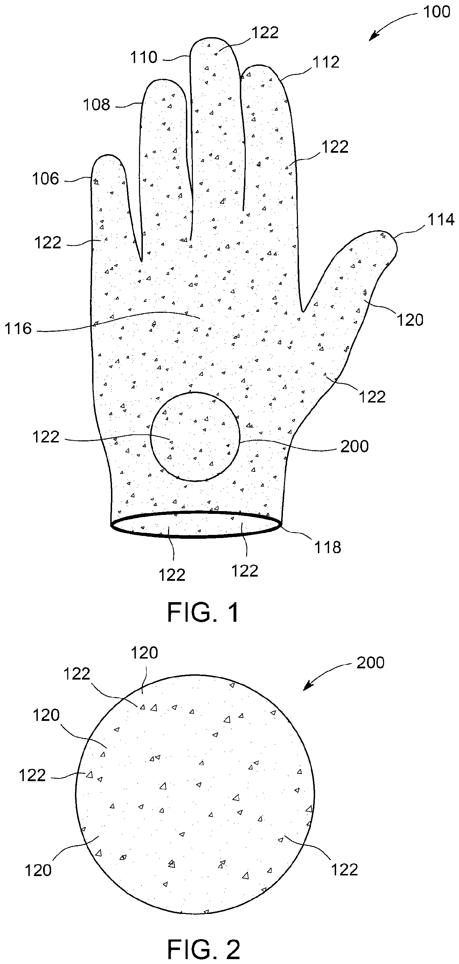

FIG. 1 depicts an unsupported glove 100 having thermally conductive particles 122, according to embodiments of the invention. The glove 100 comprises a pinky finger 106, a ring finger 108, a middle finger 110, an index finger 112, a thumb 114, a palm component 116, and, optionally, a beaded cuff 118. The unsupported glove 100 is comprised of a polymeric coating 120. Disposed on and/or within the polymeric coating 120 is a plurality of thermally conductive particles 122.

FIG. 2 depicts a close up view 200 of the unsupported glove 100 of FIG. 1, according to embodiments of the invention. The close up view 200 shows that the polymeric coating 120 comprises a plurality of the thermally conductive particles 122. The thermally conductive particles 122 are generally highly crystalline and are optionally hexagonal in shape. The plurality of thermally conductive particles 122 are not drawn to scale for ease of presentation and comprise different sizes, i.e., a particle size ranges from 1 to 300 microns and, in some exemplary embodiments, ranges from 130-260 microns and in some exemplary embodiments, ranges from 5 to 10 microns. The polymeric coating 120 comprises one or more polymeric materials or blends, as described in Tables 1-4 or in other polymeric compositions. For example, the polymeric coating 120, in accordance with embodiments of the invention, may comprise natural or synthetic polymeric coatings or mixtures or blends thereof. The polymeric coating 120 may comprise a natural latex, such as guayule or natural rubber, synthetic latexes, such as synthetic polyisoprene, carboxylated acrylonitrile butadiene, highly-carboxylated acrylonitrile butadiene, non-carboxylated acrylonitrile butadiene, acrylics, butyl latex, polychloroprene, aqueous- and/or non-aqueous-polyurethanes, styrene-butadiene, and the like, or mixtures or blends thereof. In at least one exemplary embodiment of the invention, the polymeric coating 120 comprises a highly carboxylated acrylonitrile-butadiene latex, which is, optionally, approximately 35-40% carboxylated.

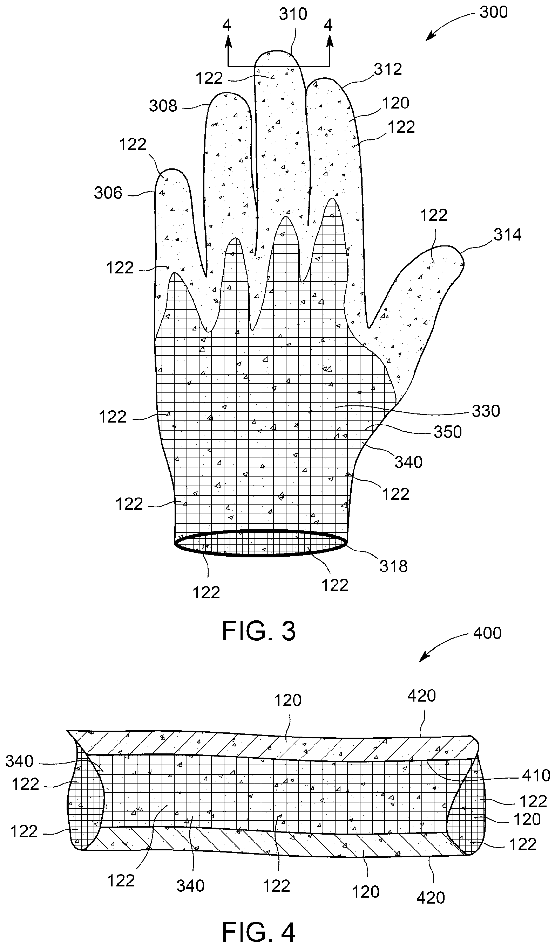

FIG. 3 depicts a supported glove 300 having thermally conductive particles embedded within a fabric liner 340 and a polymeric coating 120, according to embodiments of the invention. The supported glove 300 comprises a pinky finger 306, a ring finger 308, a middle finger 310, an index finger 312, a thumb 314, a backhand component 330, and, optionally, a cuff 318. The supported glove 300 comprises the polymeric coating 120 having the plurality of thermally conductive particles 122 disposed therein. As shown, the polymeric coating 120 comprises a palm dip although optionally a % dip, full dip, and the like, as is known to those in the art, are also within the scope of embodiments according to the invention. The fabric liner 340 comprises at least one yarn 350, which optionally comprises the plurality of thermally conductive particles 122 disposed therein.

FIG. 4 depicts a cross-section 400 taken along line 4-4 of the supported glove 300 of FIG. 3, according to embodiments of the invention. The cross section 400 shows that the polymeric coating 120 is disposed on an external surface 420 and extends to an interior surface 420, which is adhered to the fabric liner 340. As shown, the plurality of thermally conductive particles 122 is dispersed throughout the polymeric coating 120. Also, the thermally conductive particles 122 are dispersed throughout the fabric liner 340.

Gloves according to embodiments of the invention exhibit unexpectedly enhanced heat conduction from an internal heat source, through the glove, and into the environment.

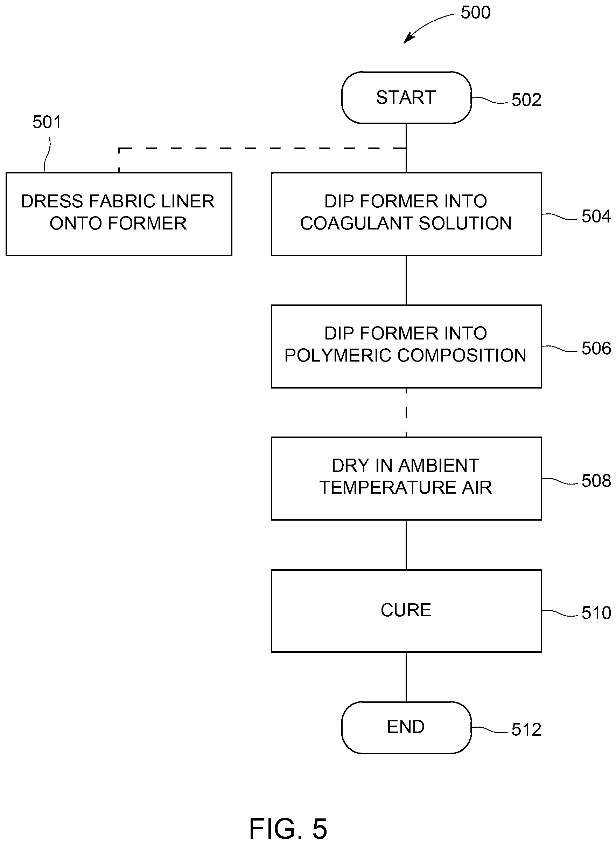

FIG. 5 depicts a method 500 for forming an unsupported glove comprising a polymeric layer 120 or a supported glove having a fabric liner 340 and a polymeric layer 120 having a plurality of thermally conductive particles 122, according to embodiments of the invention. At step 502, the method 500 starts. If a supported glove is to be manufactured, a fabric liner 340, as described above, such as a knitted fabric liner, is optionally dressed onto a hand shaped former at step 501 and the method 500 proceeds to step 504. If an unsupported glove is to be formed, the undressed hand shaped former is provided and the method 500 proceeds to step 504. Irrespective of whether an unsupported glove or a supported glove is to be formed, the fabric liner and/or the former is optionally heated before proceeding to step 504.

At step 504, the fabric liner and/or undressed former has a coagulant, such as the coagulant solutions described below, applied thereon, for example, by dipping the former/liner into a bath of the coagulant solution. In at least one embodiment of the invention, the coagulant solution is heated at a temperature ranging from 42-45°C. Also, optionally, excess coagulant solution is allowed to drip dry from the liner and/or the former, which is optionally rotated so that the fingers of the former/liner are pointed up and allowed to dry.

At step 506, the fabric liner dressed on the former or the undressed former is dipped into a polymeric or elastomeric composition, such as the composition of Tables 1-4, i.e., a foamed or non-foamed polymeric or elastomeric composition, forming a polymeric or elastomeric layer thereon. The dipping step may be a palm dip, a % dip, a knuckle dip or a full dip as is known to those in the art. Optionally, the polymeric or elastomeric composition is allowed to drip down, i.e., fingers are pointing down, to allow excess composition to drip off, and reducing the thickness of the polymeric coating formed thereon.

At step 508, the former and/or fabric liner optionally dressed on the former having the polymeric coating disposed thereon is rotated so that the polymeric coating can dry in ambient air for several minutes. In at least one embodiment according to the invention, the polymeric coating is allowed to dry for approximately one hour. At step 510, the unsupported polymeric coating or polymeric coating on a fabric liner undergo a curing step to cure the polymeric coating, such as within an oven at a temperature of approximately 130°C for ten minutes. In at least one embodiment according to the invention, the polymeric coating is cured in a staged process, for example, at a first stage at 90°C for fifteen minutes, a second stages at 100°C for fifteen minutes, and a third stage at 130°C for fifteen minutes. At step 512, the method 500 ends.

Polymeric compositions, such as the compositions described in Tables 1-4, may be compounded as are known to those in the art. For example, in at least one exemplary embodiment, the following steps are taken to compound the compositions described herein. The thermally conductive particle filler, e.g., h-BN may be optionally pre-mixed with, for example, Sodium Dodecyl Benzene Sulphonate (SDBS 50) or any suitable wetting agent(s) before the addition of other ingredients, such as surfactants, waxes and/or paraffins, thickeners and/or rheology agents, and/or fillers, such as calcium carbonate, to form a polymeric or elastomeric composition having crystalline inorganic conductive particles as shown below in Table 1. At least one exemplary embodiment according to the invention includes Sodium alkylbenzyl sulfonate as a surfactant, anionic paraffins and/or polyethylene waxes, and/or a cellulosic material as a thickener. Compounding of any of the compositions of Tables 1-4 is performed by delivering the latex and a surfactant and mixing, adding other ingredients approximately every thirty minutes during continuous mixing.

| Table 1 | |
|---|---|
| Ingredient | Part per hundred rubber (PHR) |
| Carboxylated acrylonitrile-butadiene latex | 100 |
| Surfactant | 1.2 |
| Inorganic crystalline particles (conductive) | 1.0 -2.0 |
| Paraffins/waxes | 0.3-0.5 |
| Calcium carbonate | 5 |
| Thickener | Adjust to desired viscosity |

Embodiments of the current invention further comprise wherein the above composition of Table 1, as well as Table 3-4, can be foamed to achieve 10% to 30% air content. Typically, gloves are foamed to approximately to 10% air content. The parameters of the compound to achieve at least one foamed polymeric or elastomeric composition for disposition on a fabric liner to form a glove is as below in Table 2:

| Table 2 | |
|---|---|
| Parameters | Specifications |
| Total Solids Content (TSC) | 40-43% |
| Viscosity | 1-1.3 Pa*s (1000-1300 cps) |
| pH | ∼8.7-9.1 |
| Foam content | ∼10-30% by volume |

| Table 3 | | |
|---|---|---|
| % | Ingredient | Parts per hundred (PHR) |
| 43 | Synthomer 6311 | 100 |
| 30 | Calsoft L60 | 1.2 |
| 50 | ZnO dispersions | 2.8 |
| 71 | BK1212 | 1.3 |
| 64 | BK1100 | 0.3 |
| 35 | ML 135 | 0.5 |
| 30 | Boron Nitride dispersions | 1.0 |
| 71 | Hydrocal 295 | 5.0 |
| 6 | Culminal MHPC 50 solution | 1.0 |

| Table 4 | | |
|---|---|---|
| % | Ingredient | Parts per hundred (PHR) |
| 43 | Synthomer 6311 | 100 |
| 30 | Calcium Carbonate | 1.2 |
| 50 | ZnO dispersions | 2.8 |
| 71 | BK1212 | 1.3 |
| 64 | BK1100 | 0.3 |
| 35 | ML 135 | 0.5 |
| 25 | Asbury Micro 770 dispersions | 1.0 |
| 6 | Culminal MHPC 50 solution | 1.0 |

Polymeric compositions comprise a latex material, for example, but not limited to, an aqueous, colloidal dispersion of carboxylated butadiene-acrylonitrile copolymer, such as SYNTHOMER® X6311, as described herein, and inorganic crystalline particle fillers, e.g., crystalline thermally conductive fillers, such as Asbury Micro 770 (crystalline carbon black) marketed by Asbury Graphite Mills, Inc. The polymeric compositions further comprise curing agents, such as zinc oxide dispersions; fillers, such as calcium carbonate dispersions, and/or other low cost filler dispersions; such as Hydrocal 295, marketed by Polymer Innovation Co., Ltd.; optionally, pigment dispersions, such as BK1212 and/or BK1100, surfactants, such as Calsoft L60, marketed by Pilot Chemical Co., wax emulsions, such as polyethylene blends, such as ML 135 marketed by Michelman, Inc., and thickeners, such as nonionic cellulose ethers, such as Culminal MHPC 50, marketed by the Ashland Chemical Co. Any of the foregoing may be in aqueous dispersions. Tables 3-4 represent the amounts of each ingredient as the total solids content (TSC) of the aqueous dispersions. In general, thickening agents are added last so that the amount may be corrected for a desired viscosity, such as in Table 2.

Embodiments according to the invention comprise the use of a coagulant to wet the fabric liner may include at least one exemplary aqueous solution of 6-7% calcium nitrate and 93-94% water, although other concentrations are possible as are known to those in the art. For example, aqueous, alcoholic, or a combination of aqueous and alcoholic solutions comprising 2-15% other of salts known to those in the art, such as calcium chloride, calcium citrate, acetic acid, formic acid, tricarboxylic acid and/or blends thereof.

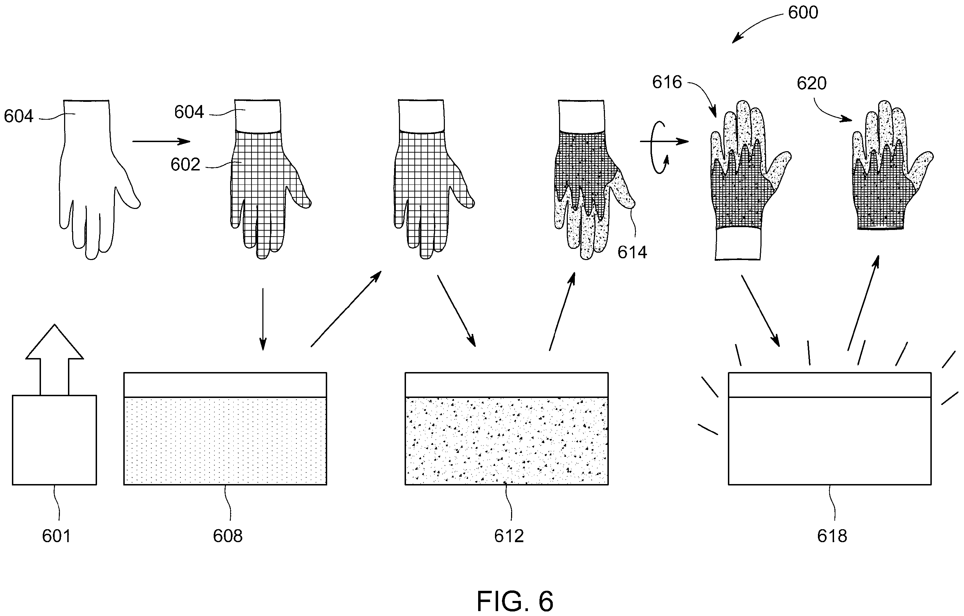

FIG. 6 depicts a diagram for a method and apparatus 600 for producing a supported glove, according to embodiments of the invention. The apparatus 600 comprises a controller 601 for controlling, for example, a conveyor (not shown) that coordinates the timing and delivery of formers 604 to tanks, ovens, and the like discussed below. The former 604 is, for example, a metallic or ceramic former generally in the shape of a hand and may be in an arcuate shape, such as a partially closed hand or, alternatively, a flat shape. The former 604, may have a fabric liner dressed thereon, such as a knitted fabric liner 602, as described above, and furthermore, the knitted fabric liner 602 optionally comprises thermally conductive particles. Embodiments of the invention also comprise a knitted fabric liner 602 and former 604 that is optionally pre-heated to approximately 50-70°C. The former 604 having the knitted fabric liner 602 dressed thereon is dipped into a first tank 608 containing a coagulant solution, e.g., an aqueous or alcoholic solution, as described herein, which is optionally heated to approximately 40-50°C. The former 604 having the knitted fabric liner 602 dressed thereon and with the coagulant disposed on the knitted fabric liner 602 is removed from the first tank 608 and allowed to drip dry. In some embodiments according to the invention, the former 604 is drip dried with the former 604 pointing down for approximately one to three minutes and/or, allowed to drip dry with the former 604 pointing up for one to three minutes.

The former 604 having the knitted fabric liner 602 dressed thereon and with the coagulant disposed on the knitted fabric liner 602 is then dipped into a second tank 612, containing a polymeric or elastomeric composition that further comprises thermally conductive particles therein, such as described in Table 1-4, and is removed therefrom. The polymeric or elastomeric composition in the second tank 612 may be a foamed composition or a non-foamed composition. At least one exemplary embodiment according to the invention comprises a polymeric or elastomeric composition 612 that is a foamed to approximately 10% volumetric air content, as shown in, for example, Table 2, to form an ungelled, i.e., uncured, polymeric or elastomeric coating 614.

The polymeric or elastomeric coating 614, in some embodiments according to the invention, is drip dried with the former 604 pointing down for approximately one to three minutes and/or, allowed to drip dry with the former 604 pointing up for one to three minutes so that excess polymeric or elastomeric composition 616 can drip off. The polymeric or elastomeric coating 614 is optionally leached using room temperature or hot water (not shown) and/or allowed to dry in ambient air for approximately three to ten minutes. The former 604 and the knitted fabric liner 602 having the polymeric or elastomeric coating 614 is then delivered to an oven 618, in which the polymeric or elastomeric coating 614 is cured to form a glove 620. The polymeric or elastomeric layer is cured, for example, at a temperature ranging between 90-130°C. In some exemplary embodiments, the polymeric layer(s) is cured at, for example, 120° C for approximately one hour. The curing step(s) comprise, in some embodiments, curing in an oven, such as an infrared oven, at, for example, 90°C for approximately 10 to 20 minutes in a first curing stage, 100°C for approximately 10 to 20 minutes, and at 130°C for approximately 10 to 20 minutes, wherein a cured glove is formed.

Also, some steps of the preceding method may be omitted or performed in a different sequence. Furthermore, additional steps may be employed. For example, the uncured polymeric coating on the former may be stripped, washed, and dried after the curing step(s). Washing can be carried out at a temperature between approximately 25°C and 60°C, for approximately 15 to 90 minutes. The gloves may then be dried in a tumble dryer for approximately 20 to 60 minutes at 50°C to 70°C. Also, other processes may be applied before the curing step. For example, texturization or wrinkling processes may added gripping properties to any glove described herein. For example, a salt-based texturization may be applied to a foamed or non-foamed nitrile-butadiene layer, as disclosed in commonly-assigned US Patent Nos. 8,522,363 and 7,771 ,644.

Any polymeric or elastomeric coating described herein comprises one or more polymeric materials or blends thereof, including thermoplastic and thermoset materials. A polymeric or elastomeric coating, such as the polymeric or elastomeric coating 120, may comprise a natural latex, such as guayule or natural rubber, synthetic latexes, such as synthetic polyisoprene, carboxylated acrylonitrile butadiene, highly-carboxylated acrylonitrile butadiene, non-carboxylated acrylonitrile butadiene, acrylics, butyl latex, polychloroprene, aqueous- and/or non-aqueous-polyurethanes, styrene-butadiene, and the like, or mixtures or blends thereof. At least one exemplary embodiment of the invention comprises an aqueous, colloidal dispersion of carboxylated butadiene-acrylonitrile copolymer having a medium acrylonitrile level. The dispersion contains an emulsifier system and is stabilized with an antioxidant. At least one example of an aqueous, colloidal dispersion of carboxylated butadiene-acrylonitrile copolymer is SYNTHOMER® X6311, which is manufactured by Synthomer PLC. Also, at least one exemplary embodiment of the invention, the polymeric coating 120 comprises a highly carboxylated acrylonitrile-butadiene latex, which is optionally approximately 35-40% carboxylated. Thermosetting materials may include, for example, phenolics, silicones, polyesters, vulcanizable natural and synthetic rubber materials.

Any polymeric or elastomeric composition described herein further comprises additional components as are known to those in the art. For example, any composition may contain thickening agents, i.e., rheological modifiers, as known to those in the art to control the viscosity of the thermosetting and/or polymeric and/or thermoplastic materials, surfactants for dispersing various additives, anti-oxidants, stabilizers for stabilizing foams, wetting agents, pigments, vulcanizing agents, such as sulfur, zinc oxides, rubber accelerators, activators, thioureas, benzothiazole sulphenamides, thiazoles, such as mercaptobenzothiazole, zinc mercaptobenzothiazole, dibenzodithiazyl disulphide, dialkyl dithiocarbamates, such as sodium dimethyldithiocarbarmate, zinc dimethyldithiocarbarmate, zinc diethyl dithiocarbamate, zinc dibutyldithiocarbamate, sodium diethyldithiocarbamate, sodium dibutyldithiocarbamate, zinc dibenzyldithiocarbamate, or combinations thereof; thiurams, such as tetramethyl thiuramdisulfide, tetraethyl thiuramdisulfide, teirabutyl thiuramdisulfide, dipentamethylene thiuramtetrasulfide or xanthogens, such as diisopropyl xanthogen polysulfide, dihydrocarbyl xanthogen polysulfide, dibutyl xanthogen polysulfide, or combinations thereof; and the like are all contemplated herein.

Embodiments of the invention comprise thermally conductive gloves having at least one polymeric layer in the shape of a hand and having a stalls for a thumb, an index finger, a middle finger, a ring finger, and a little finger for receiving the hand of a wearer; and thermally conductive particles, wherein the thermally conductive particles are highly crystalline and dispersed within the at least one polymeric layer, wherein the thermally conductive particles are at least one of h-Boron Nitride (h-BN), crystalline boron nitride (c-BN), synthetic single walled carbon graphite (SWCN) or natural crystalline graphite (NCWG), wherein the thermally conductive particles comprise 1 to 15 parts per hundred rubber dispersed within the polymeric layer, and wherein the thermally conductive particles range from 1 micron to 300 microns in size.

Also, any glove described herein, whether supported or non-supported may comprise, a highly-carboxylated nitrile-butadiene composition. A highly-carboxylated acrylonitrile-butadiene in this context indicates approximately 35-40% acrylonitrile, and is particularly oil-resistant, providing enhanced gripping properties.

At least one exemplary embodiment according to the invention comprises a second polymeric layer. For example, the method for making a glove may further comprise a step for disposing a foamed polymeric layer on the former described above. The foamed polymeric layer may optionally have a coagulant disposed thereon and, subsequently, a second non-foamed polymeric composition disposed thereon. Alternatively, a non-foamed polymeric layer may be disposed on a former, a foamed layer may be disposed on the non-foamed polymeric layer (again, with or without a coagulant disposed on the foamed layer before the disposition of the non-foamed polymeric layer), the foamed layer and the non-foamed layer disposed thereon is inverted, so that the non-foamed layer is now an outer layer and the foamed layer is an inner layer.

At least one exemplary embodiment of the invention comprises a surgical or examination glove, in the shape of a hand, comprised of a polymeric composition having thermally conductive fillers disposed within the polymeric composition. Also, in some embodiments, the thermally conductive fillers are highly crystalline fillers that are hexagonal in crystalline structure.

At least one exemplary embodiment of the invention described above comprises a flock lining disposed on an internal surface of a glove.

At least one exemplary embodiment of the invention described above comprises a fabric liner having a polymeric coating adhered thereto, forming a supported glove.

At least one exemplary embodiment of the invention described further comprises a fabric liner having at least one of nylon, ultra-high molecular weight polyethylene, p-aramid, m-aramid, polyester, or elastane yarns.

At least one exemplary embodiment of the invention described further comprises a fabric liner having at least one of nylon, ultra-high molecular weight polyethylene, p-aramid, m-aramid, polyester, or elastane yarns that further comprise thermally conductive particle fillers, such as by dry, wet, or gel spinning processes as are known to those in the art.

At least one exemplary embodiment of the invention described herein has an ability to remove human body heat at a skin contacting interface of the glove, through a thickness of the glove, and transferring heat to the environment.

At least one exemplary embodiment of the invention described above comprises a glove having at least one of a fabric liner or a flock lining, wherein yarns and/or fibers of the fabric liner or flock lining further comprises thermally conductive particles.

All numerical values recited herein are exemplary, are not to be considered limiting, and include ranges therebetween, and can be inclusive or exclusive of the endpoints. Optional included ranges can be from integer values therebetween, at the order of magnitude recited or the next smaller order of magnitude. For example, if the lower range value is 0.1, optional included endpoints can be 0.2, 0.3, 0.4 ... 1.1, 1.2, and the like, as well as 1, 2, 3 and the like; if the higher range is 10, optional included endpoints can be 7, 6, and the like, as well as 7.9, 7.8, and the like.

To facilitate understanding, identical reference numerals have been used, where possible, to designate comparable elements that are common to the figures. The figures are not drawn to scale and may be simplified for clarity. It is contemplated that elements and features of one embodiment may be beneficially incorporated in other embodiments without further recitation.

## Claims

1. A glove (100, 300, 620), comprising:
at least one polymeric layer (120, 614) in the shape of a hand and having a stalls for a thumb (114, 314), an index finger (112, 312), a middle finger (110, 310), a ring finger (108, 308), and a little finger (106, 306) for receiving the hand of a wearer; and
thermally conductive particles (122), wherein the thermally conductive particles (122) are highly crystalline and dispersed within the at least one polymeric layer (120, 614),
**characterized in that** the thermally conductive particles (122) are at least one of h-Boron Nitride (h-BN), crystalline boron nitride (c-BN), synthetic single walled carbon graphite (SWCN) or natural crystalline graphite (NCWG),
wherein the thermally conductive particles (122) comprise 1 to 15 parts per hundred rubber dispersed within the polymeric layer (120, 614), and
wherein the thermally conductive particles (122) range from 1 micron to 300 microns in size.

2. The glove (100, 300, 620) of claim 1, wherein the thermally conductive particles (122) are at least one of nano-sized or micro-sized particles.

3. The glove (100, 300, 620) of claim 1, wherein the thermally conductive particles (122) are hexagonal and/or hexagonal rhombohedral in crystalline structure.

4. The glove (100, 300, 620) of claim 1, wherein the polymeric layer (120, 614) comprises at least one of carboxylated acrylonitrile butadiene, non-carboxylated acrylonitrile butadiene, polychloroprene, natural rubber, synthetic polyisoprene, polyurethane, or blends thereof.

5. The glove (100, 300, 620) of claim 1, wherein the polymeric layer (120, 614) further comprises at least one of a closed-cell foam or an open-celled foam.

6. The glove (100, 300, 620) of claim 1, wherein the thermally conductive particles (122) provide a mechanism to transport heat effectively through phonons vibration waves across crystallite structures of the thermally conductive particles (122) through said the polymeric coating.

7. The glove (100, 300, 620) of claim 1, wherein the thermally conductive particles (122) range in size from 130 to 260 microns or from 5 to 10 microns.

8. The glove (100, 300, 620) of claim 1 or 7, wherein the thermally conductive particles (122) are hexagonal in crystalline structure.

9. The glove (300, 620) of claims 1 or 7, wherein the at least one polymeric layer (120, 614) is combined with flock to form a flock-lined glove.

10. The glove (300, 620) of claims 1 or 7, wherein the polymeric layer (120, 614) is disposed on a fabric liner (340, 602) to form a supported glove (300), wherein the fabric liner (340, 602) comprises at least one of nylon, ultra-high molecular weight polyethylene, p-aramid, m-aramid, polyester, or elastane yarns (350).

11. The glove (300, 620) of claim 10, wherein the at least one of nylon, ultra-high molecular weight polyethylene, p-aramid, m-aramid, polyester, or elastane yarns (350) further comprise thermally conductive particle fillers (122).

12. The glove (300, 620) of claim 10, wherein the fabric liner (340, 602) comprises thermally conductive particles (122).

## Patentansprüche

1. Handschuh (100, 300, 620), umfassend:
wenigstens eine Polymerschicht (120, 614) in der Form einer Hand und mit einer Aufnahme für einen Daumen (114, 314), einen Zeigefinger (112, 312),
einen Mittelfinger (110, 310), einen Ringfinger (108, 308) und einen kleinen Finger (106, 306) zum Aufnehmen der Hand eines Trägers; und
wärmeleitfähige Partikel (122), wobei die wärmeleitfähigen Partikel (122) hochkristallin und in der wenigstens einen Polymerschicht (120, 614) dispergiert sind,
**dadurch gekennzeichnet, dass**
die wärmeleitfähigen Partikel (122) wenigstens eines von h-Bornitrid (h-BN), kristallinem Bornitrid (c-BN), synthetischem einwandigem Kohlenstoffgraphit (SWCN) und natürlichem kristallinem Graphit (NCWG) sind,
wobei die wärmeleitfähigen Partikel (122) 1 bis 15 Teile pro hundert Kautschuk in der Polymerschicht (120, 614) dispergiert umfassen und
wobei die wärmeleitfähigen Partikel (122) eine Größe in dem Bereich von 1 Mikrometer bis 300 Mikrometer aufweisen.

2. Handschuh (100, 300, 620) gemäß Anspruch 1, wobei die wärmeleitfähigen Partikel (122) wenigstens eines von nanoskaligen und mikroskaligen Partikeln sind.

3. Handschuh (100, 300, 620) gemäß Anspruch 1, wobei die wärmeleitfähigen Partikel (122) eine hexagonale und/oder hexagonal-rhomboedrische kristalline Struktur aufweisen.

4. Handschuh (100, 300, 620) gemäß Anspruch 1, wobei die Polymerschicht (120, 614) wenigstens eines von carboxyliertem Acrylnitrilbutadien, nichtcarboxyliertem Acrylnitrilbutadien, Polychloropren, Naturkautschuk, synthetischem Polyisopren, Polyurethan und Gemischen davon umfasst.

5. Handschuh (100, 300, 620) gemäß Anspruch 1, wobei die Polymerschicht (120, 614) ferner wenigstens eines von einem geschlossenzelligen Schaumstoff und einem offenzelligen Schaumstoff umfasst.

6. Handschuh (100, 300, 620) gemäß Anspruch 1, wobei die wärmeleitfähigen Partikel (122) einen Mechanismus zum wirkungsvollen Transport von Wärme durch Phononenschwingungswellen durch Kristallitstrukturen der wärmeleitfähigen Partikel (122) durch die Polymerbeschichtung bereitstellen.

7. Handschuh (100, 300, 620) gemäß Anspruch 1, wobei die wärmeleitfähigen Partikel (122) eine Größe in dem Bereich von 130 bis 260 Mikrometer oder von 5 bis 10 Mikrometer aufweisen.

8. Handschuh (100, 300, 620) gemäß Anspruch 1 oder 7, wobei die wärmeleitfähigen Partikel (122) eine hexagonale kristalline Struktur aufweisen.

9. Handschuh (300, 620) gemäß Anspruch 1 oder 7, wobei die wenigstens eine Polymerschicht (120, 614) mit Flock kombiniert ist, um einen flockausgekleideten Handschuh zu bilden.

10. Handschuh (300, 620) gemäß Anspruch 1 oder 7, wobei die Polymerschicht (120, 614) auf einer Gewebeauskleidung (340, 602) angeordnet ist, um einen gestützten Handschuh (300) zu bilden, wobei die Gewebeauskleidung (340, 602) wenigstens eines von Garnen aus Nylon, Polyethylen mit ultrahohem Molekulargewicht, p-Aramid, m-Aramid, Polyester oder Elastan (350) umfasst.

11. Handschuh (300, 620) gemäß Anspruch 10, wobei das wenigstens eine von Garnen aus Nylon, Polyethylen mit ultrahohem Molekulargewicht, p-Aramid, m-Aramid, Polyester oder Elastan (350) ferner wärmeleitfähige partikelförmige Füllstoffe (122) umfasst.

12. Handschuh (300, 620) gemäß Anspruch 10, wobei die Gewebeauskleidung (340, 602) wärmeleitfähige Partikel (122) umfasst.

## Revendications

1. Gant (100, 300, 620), comprenant :
au moins une couche polymérique (120, 614) ayant la forme d'une main et possédant un logement pour un pouce (114, 314), un index (112, 312), un majeur (110, 310), un annulaire (108, 308), et un petit doigt (106, 306) pour recevoir la main d'un porteur ; et
des particules thermiquement conductrices (122), les particules thermiquement conductrices (122) étant hautement cristallines et dispersées dans l'au moins une couche polymérique (120, 614),
**caractérisé en ce que**
les particules thermiquement conductrices (122) sont au moins l'un parmi un nitrure de bore h (h-BN), un nitrure de bore cristallin (c-BN), un graphite de carbone synthétique à paroi simple (SWCN) et un graphite cristallin naturel (NCWG),
les particules thermiquement conductrices (122) comprenant 1 à 15 parties par cent de caoutchouc dispersées dans la couche polymérique (120, 614), et
les particules thermiquement conductrices (122) étant d'une grosseur dans la plage de 1 micron à 300 microns.

2. Gant (100, 300, 620) selon la revendication 1, les particules thermiquement conductrices (122) étant des particules de taille nanométrique et/ou de taille micrométrique.

3. Gant (100, 300, 620) selon la revendication 1, les particules thermiquement conductrices (122) étant de structure cristalline hexagonale et/ou hexagonale rhomboédrique.

4. Gant (100, 300, 620) selon la revendication 1, la couche polymérique (120, 614) comprenant au moins l'un parmi un acrylonitrile butadiène carboxylé, un acrylonitrile butadiène non carboxylé, un polychloroprène, un caoutchouc naturel, un polyisoprène synthétique, un polyuréthane, ou des mélanges correspondants.

5. Gant (100, 300, 620) selon la revendication 1, la couche polymérique (120, 614) comprenant en outre au moins l'une parmi une mousse à alvéoles fermées et une mousse à alvéoles ouvertes.

6. Gant (100, 300, 620) selon la revendication 1, les particules thermiquement conductrices (122) fournissant un mécanisme pour transporter la chaleur de manière efficace par l'intermédiaire d'ondes de vibration de phonons à travers des structures de cristallite des particules thermiquement conductrices (122) à travers ledit revêtement polymérique.

7. Gant (100, 300, 620) selon la revendication 1, les particules thermiquement conductrices (122) étant d'une grosseur dans la plage de 130 à 260 microns ou de 5 à 10 microns.

8. Gant (100, 300, 620) selon la revendication 1 ou 7, les particules thermiquement conductrices (122) étant de structure cristalline hexagonale.

9. Gant (300, 620) selon la revendication 1 ou 7, l'au moins une couche polymérique (120, 614) étant combinée avec un flocage pour former un gant à doublure floquée.

10. Gant (300, 620) selon la revendication 1 ou 7, la couche polymérique (120, 614) étant disposée sur une doublure en tissu (340, 602) pour former un gant supporté (300), la doublure en tissu (340, 602) comprenant au moins l'un parmi un nylon, un polyéthylène à poids moléculaire très élevé, un p-aramide, un m-aramide, un polyester et des fils d'élasthanne (350).

11. Gant (300, 620) selon la revendication 10, l'au moins un parmi un nylon, un polyéthylène à poids moléculaire très élevé, un p-aramide, un m-aramide, un polyester et des fils d'élasthanne (350) comprenant en outre des charges de particules thermiquement conductrices (122).

12. Gant (300, 620) selon la revendication 10, la doublure en tissu (340, 602) comprenant des particules thermiquement conductrices (122).
